# EUROPEAN PATENT SPECIFICATION

(11) **EP 2 965 374 B1**
(45) Date of publication and mention of the grant of the patent: **13.06.2018**
(21) Application number: 14715949.5
(22) Date of filing: 09.04.2014
(51) Int. Cl.: H01M 8/08, H01M 8/0662, C01B 3/50, C01B 3/10, H01M 8/04089, B01D 53/62, H01M 8/0668, H01M 8/04082, H01M 8/0612, H01M 8/06

(54) **HIGH EFFICIENCY FUEL CELL SYSTEM WITH ANODE GAS CHEMICAL RECUPERATION AND CARBON CAPTURE**
HOCHEFFIZIENTES BRENNSTOFFZELLENSYSTEM MIT CHEMISCHER ANODENGASRÜCKGEWINNUNG UND KOHLENSTOFFABSCHEIDUNG
SYSTÈME DE PILES À COMBUSTIBLES HAUTE EFFICACITÉ À RÉCUPÉRATION CHIMIQUE DU GAZ D'ANODE ET CAPTURE DU CARBONE

(30) Priority: 09.04.2013 US 201313858990
(43) Date of publication of application: 13.01.2016
(73) Proprietor: Siemens Aktiengesellschaft, 80333 München (DE)
(72) Inventor: IYENGAR, Arun K. S., Delmont, PA 15626 (US); KÜHNE, Michael, 90762 Fürth (DE); LITZINGER, Kevin P., Level Green, PA 15085 (US)
(86) International application number: PCT/EP2014/057147
(87) International publication number: WO 2014/166992

(56) References cited:
- US-A1- 2003 035 770
- US-A1- 2005 175 533
- US-A1- 2009 169 931

## Description

### BACKGROUND

### 1. Field of the Invention

The invention relates to fuel cell systems utilizing metal based redox (reduction/oxidation) reaction components which treat and recirculate fuel cell spent fuel gas providing increased hydrogen content and capturing carbon dioxide.

### 2. Description of Related Art

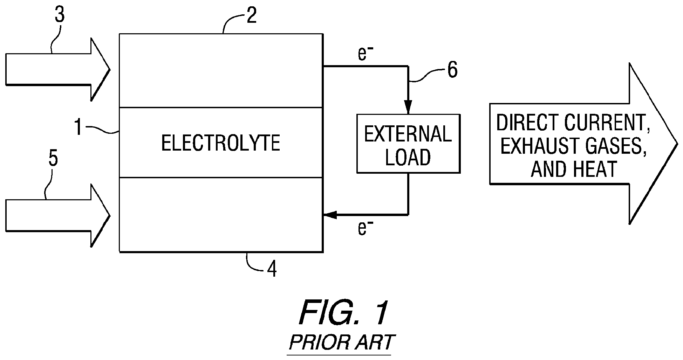

Ceramic fuel cells are energy conversion devices that electrochemically combine carbon fuels and oxidant gases across an ionic conducting solid electrolyte and are disclosed in detail by Nguyen Q. Minh in J. Am. Ceram. Soc., 76[3]563-88 (1993) "Ceramic Fuel Cells." FIG. 1 shows general solid electrolyte fuel cell operation where solid electrolyte 1 is sandwiched between an anode 2, which receives fuel/reformed fuel 3 and a cathode "air" electrode 4 which receives air/oxidant 5 to generate electrons (electricity) 6. The reformed fuel has many impurities such as sulfur removed from it. An external load and direct current, exhaust gases and heat out are also shown.

U.S. Patent No. 4,729,931 (Grimble) taught that in a high temperature solid oxide fuel cell, air and a fuel are combined to form heat and electricity. Because fuels such as methane and alcohol can, under certain conditions, form carbon or soot at the very high temperatures at which these fuel cells operate, and carbon and soot can reduce the efficiency of the fuel cell, the fuels that can be used in the cell have generally been limited to carbon monoxide and hydrogen. The carbon monoxide and hydrogen can be obtained by reforming fuels such as methane, ethane, and alcohols. Reforming is a process in which the reformable fuel is combined with water and/or carbon dioxide to produce carbon monoxide and hydrogen. The reformed fuel is then used in the solid oxide fuel cell. Since reforming is an endothermic process, additional thermal energy must be supplied either by direct combustion or by heat transfer through the walls of a heat exchanger.

Solid oxide system applications were discussed by W. L. Lundberg in Proceedings of the 25th Intersociety Energy Conversion Engineering Conference, Vol. 3; IECEC-90; August 12-17, 1990 Reno Nevada; "System Applications of Tubular Solid Oxide Fuel Cells;" discussing desulfurizers, preheaters for the air stream, power conditioners and their association in a coal powered power plant. Other systems patents include, for example, U.S. Patent Nos.: 5,532,573; 5,573,867; 6,689,499B2; and 6,946,209B1 (Brown et al., Zafred et al., Gillett et al. and Israelson).

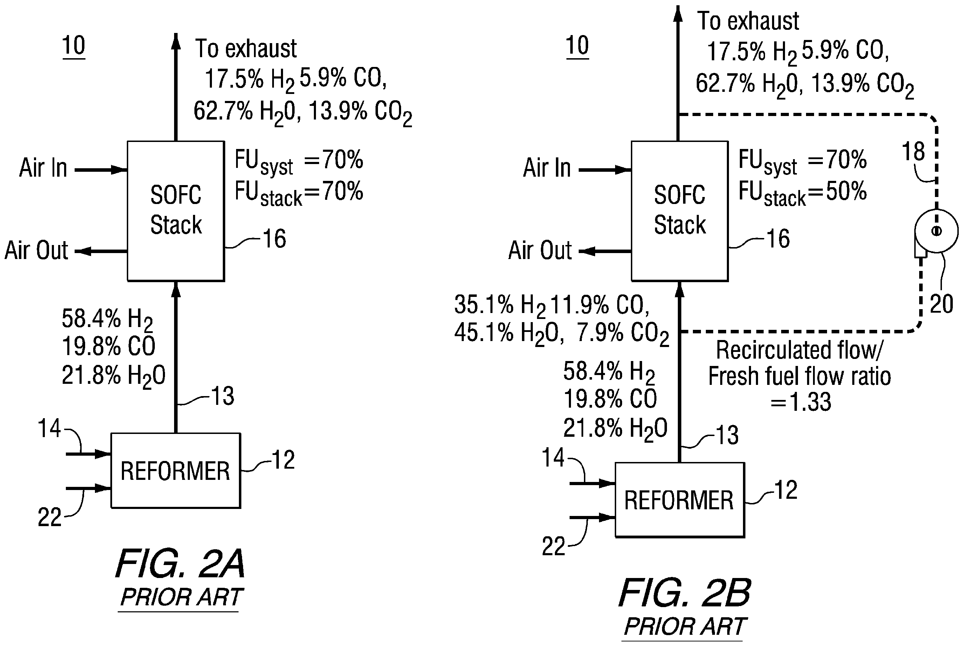

A schematic of the fuel side of a conventional prior art solid fuel cell (SOFC) system 10 operating once-through on natural gas fuel (methane, ethane, possibly propane and butane, with nitrogen, carbon dioxide and sulfur compounds such as H₂S) is shown in FIG. 2(A). It typically features a reformer 12 that transforms the incoming natural gas fuel 14 to a reformed fuel mixture of H₂ and CO 13 that can be converted electrochemically into electric power in a fuel cell stack 16 which contains a plurality of fuel cells. While it is desirable to utilize all the fuel using the thermodynamically efficient electrochemical process, practical considerations such as fuel flow mal-distributions limit electrochemical fuel utilization (FU) in such systems to about 70%, as shown in FIG. 2; Fuel-starvation of any area of the stack can result in damage to the SOFC stack 16.

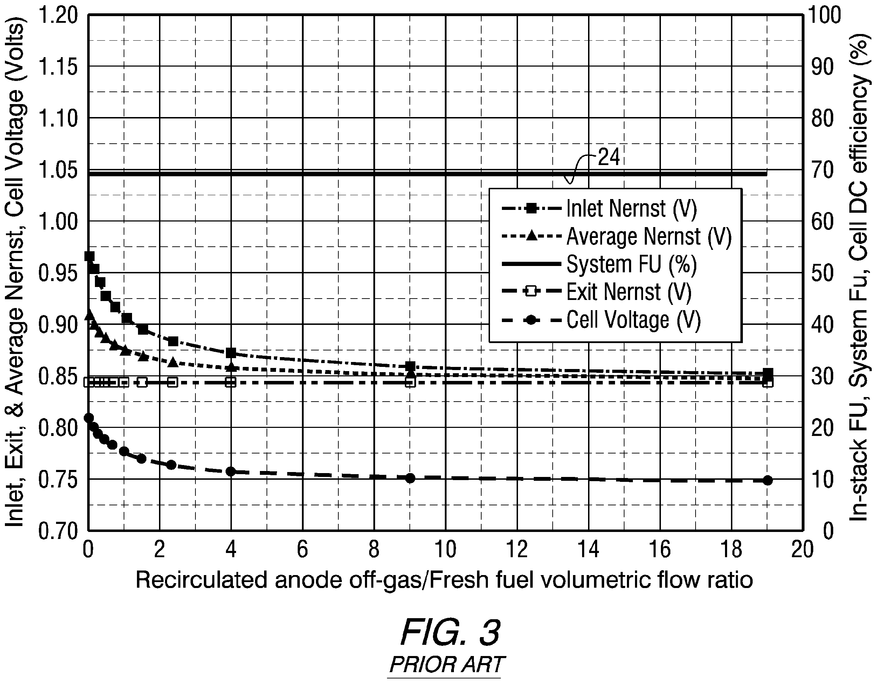

Anode / spent fuel gas recirculation 18, which decreases apparent in-stack fuel utilization, is commonly employed, as shown in FIG. 2B, to decrease stack sensitivity to fuel flow mal-distribution. Recirculation pump is shown as 20. Water fed to the reformer is shown as 22 in both figures. Anode gas recirculation with this system is detrimental to performance as it tends to decrease the net electrochemical (Nernst) potential by decreasing the inlet and average mole-fractions of fuel across the stack, thus system FU=70% but stack FU = only 50%.
The variation of inlet, exit and average Nernst potentials as a function of the ratio of the recirculated anode off-gas volumetric flow to the fresh (reformed) fuel volumetric flow for a system, FU line 24, of 70% is shown in FIG. 3, along with the variation of in-stack FU and cell DC efficiency (for a representative cell operating point). While the in-stack FU decreases as the recirculation flow is increased, the average Nernst across the stack decreases resulting in a loss of cell DC efficiency, and consequently, an undesirable overall loss in system performance. All other values (curves) are shown decreasing at increasing flow ratios.

US 2009/0169931 A1 describes a fuel cell system comprising a fuel cell assembly, a carbon dioxide removal unit, an anode exhaust conduit connecting the fuel cell assembly and the unit, a fuel source, an oxygen source, a fuel conduit and a recycle conduit. US 2003/0035770 A1 further describes a method for separating gas mixtures containing synthesis gas into separate streams of white hydrogen containing significantly reduced amounts of CO₂ and CO, with the CO₂ containing less than 1% fixed gases. US 2005/0175533 A1 further describes a method for producing hydrogen gas comprising reducing a metal oxide in a reduction reaction between a carbon based fuel and a metal oxide to provide a reduced metal or metal oxide having a lower oxidation state.

What is needed is a system where electrochemical fuel utilization (FU) is improved to the point of 85% to 100% and where carbon dioxide can be captured rather than being released to the atmosphere: 13.9% CO₂ in FIG. 2A and 13.9% in FIG. 2B. It is a main object of this invention to provide a system where FU > 90% and essentially pure CO₂ can be captured.

### SUMMARY

The above needs are met and object accomplished by using a method of providing anode gas exhaust chemical recuperation from a fuel cell stack as well as carbon dioxide capture, according to the invention defined in independent claim 1, comprising the steps: (a) feeding a fuel and optional water to a reformer to provide a reformed fuel stream consisting essentially of H₂, CO and H₂O; (b) feeding the reformed fuel as well as feeding air to a fuel cell stack containing a fuel electrode anode, and an air electrode with solid electrolyte between the electrodes, operating at a temperature over 600°C, preferably 600°C to 850°C, to provide energy and anode gas exhaust containing at least H₂, H₂O and CO₂; (c) feeding the anode gas exhaust to a first oxidation/reduction bed to provide a first redox exit stream consisting essentially of H₂O and CO₂ which is split into a first redox exit stream and a second redox exit stream; (d) feeding the first redox exit stream to a condenser to provide separate CO₂ and H₂O streams; (e) feeding the second redox exit stream to a second oxidation/reduction bed to form a final redox exit stream (recirculation redox exit stream) comprising at least 65 vol.% H₂, which final redox exit stream is recirculated back into the reformed fuel in step (a).

Additionally, a boiler can take a feed of water from the condenser in step (d) to provide steam which is then fed to the second oxidation/reduction bed to provide a final redox exit stream comprising at least 80 vol.% H₂, which is recirculated back into the reformed fuel of step (a). In another embodiment based on use of a boiler, the two oxidation/reduction beds can be combined with anode gas exhaust from the fuel cell stack fed to a first portion which exits H₂O and CO₂ into a condenser to recover CO₂ and exit water and with boiler water passing to a second portion which exits H₂ back into the reformed fuel.

### BRIEF DESCRIPTION OF THE DRAWINGS

For a better understanding of the invention, reference may be made to the Summary and preferred embodiments exemplary of the invention, shown in the accompanying drawings, in which:
FIG. 1 is a schematic illustration of one type of SOFC operation;
FIG. 2A is a schematic flow diagram of a prior art reformer/SOFC system without anode off-gas/spent fuel recirculation, with approximate gas flow percents;
FIG. 2B is a schematic with anode off-gas/spent fuel recirculation with approximate gas flow percents;
FIG. 3 is a graph of Nernst voltages, cell voltage, in-stack FU (fuel utilization = 70%) and cell DC efficiency variation with anode off-gas recirculated flow for prior art system FIG. 2B;
FIG. 4, which best shows the invention, is a schematic flow diagram of the basic system of this invention utilizing two redox beds and a condenser to capture pure (greater than 98 vol. % CO₂) CO₂;
FIG. 5 is a graph of Nernst voltages, cell voltage, in-stack FU (fuel utilization about 100%) and cell DC efficiency variation for the invention system of FIG. 4;
FIG. 6 is a schematic flow diagram of an optional system of this invention utilizing two redox beds and a condenser to capture pure (greater than 98 vol. % CO₂) CO₂ and recirculation of steam from a boiler to a second redox bed; and
FIG. 7 is a schematic flow diagram of an optional system of this invention utilizing a boiler and combined oxidation reduction beds.

### DESCRIPTION OF THE PREFERRED EMBODIMENTS

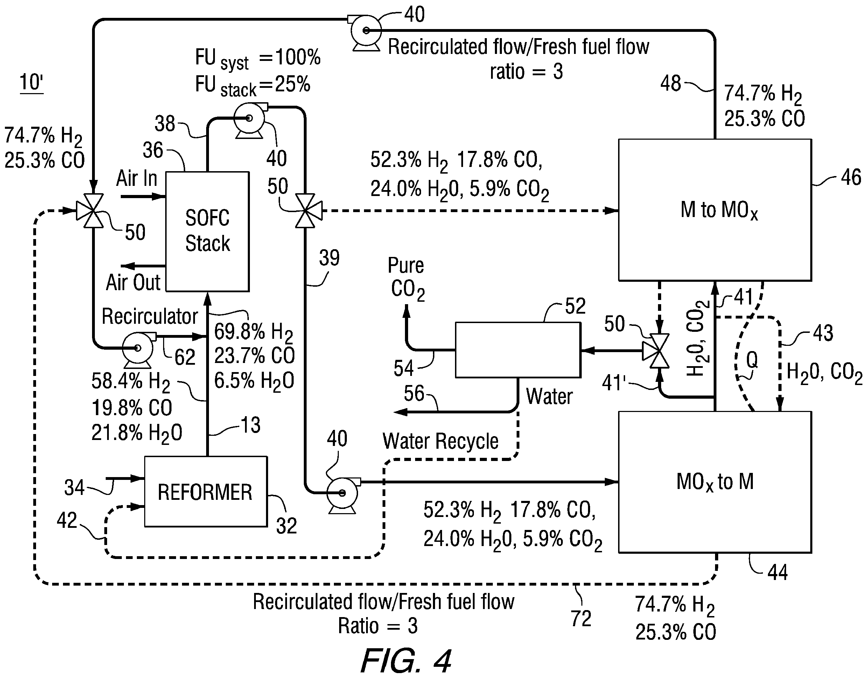

The proposed invention is shown schematically in FIG 4. It shows the SOFC system 10' of this invention, with reformer 32, natural gas 34, reformed fuel 13, fuel cell stack 36, anode/spent fuel recirculation 38 and 39, at least one recirculation pump 40 and water 42 fed to the reformer. It utilizes anode gas recirculation in conjunction with metal/metal oxide (M/MOₓ) redox beds 44 (MOₓ → M) and 46 (M → MOₓ), to extract H₂O and CO₂ from the anode off-gas (recirculation gas) 38 and 39 from the stack 36 and return an H₂ and CO exit stream 48 back to the stack 36. The H₂ and CO in the anode off-gas 39 (recirculation gas) reduces the metal oxide to metal in the first bed 44, which is designed to completely utilize the H₂ and CO in the incoming recirculation gas 39. A first portion of the resultant stream of H₂O and CO₂ 41 from the first bed 44 is sent to the second bed 46 and subsequently exhausted as gas 48 from the second bed 46. A second portion 41' of the H₂O and CO₂ stream 41, corresponding to the mass flow rate of fuel and water added to the system (to ensure consistent material balance and avoid system pressurization), is condensed in condenser 52 to yield a stream of essentially pure CO₂, 54, which can be sequestered to enable nearly complete capture of the carbon present in the incoming fuel. Water 56 from the condenser is shown as 56 and can be recycled as stream 42 to reformer 32. Q is shown as heat transfer. The present invention simplifies the CO₂ separation process without the need for expensive anode gas heat exchangers and complex CO₂ separation technologies. A variety of valves are shown as 50.

The H₂O and CO₂ stream 41 is directed to the second bed 46 where they oxidize the metal (M to MOₓ). The resulting exit/exhaust stream of H₂ and CO 48 is recirculated back to the stack inlet at 62 to mix with the incoming reformed fuel 64 and can be utilized efficiently using the electrochemical process of the SOFC stack 36. The beds 44 and 46 can be sized to support a high recirculation rate, of up to 3 recirculated flow/fresh fuel, as shown in FIG. 4, which can reduce the in-stack fuel utilization to low values, increasing its reliability to fuel flow mal-distributions, while still achieving an overall fuel utilization of nearly 100%. In FIG. 4, a stream 72 of about 70 vol. % to 80 vol. % H₂ and 20 vol. % to 30 vol. % CO, preferably about 75 vol. % H₂ and 25 vol. % CO can optionally be fed from first bed 44 to valve 50 feeding into the reformed fuel and stack 36.

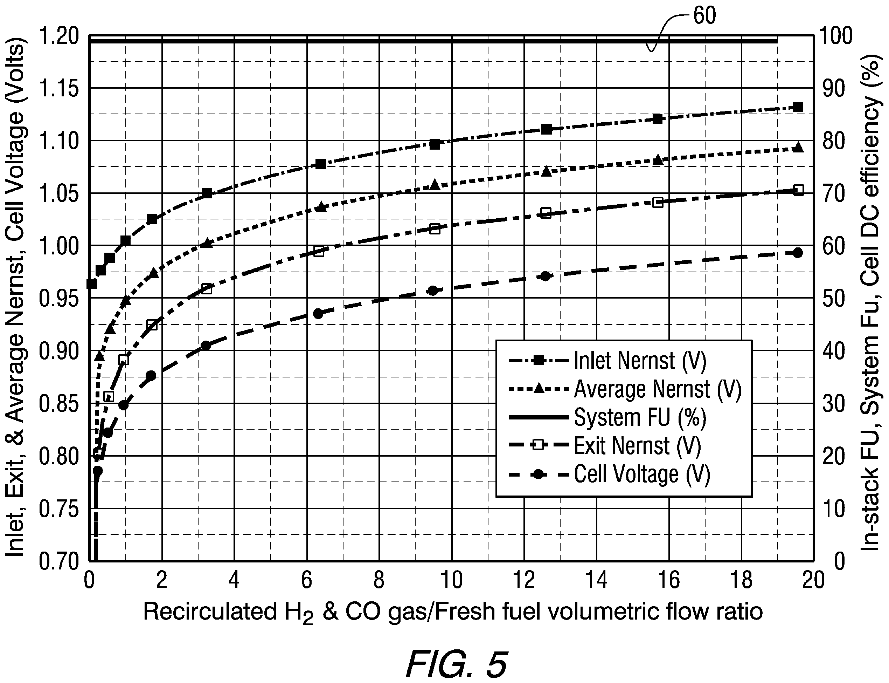

FIG. 5 shows a plot of the variation of the inlet, exit and average Nernst potentials, the in-stack FU, and the cell DC efficiency as a function of the ratio of the recirculated anode H₂ and CO flow to the fresh fuel volumetric flow analogous to prior art FIG. 3 for the proposed system; where FIG. 5 shows a system FU line 60 of about 100% vs. a system FU of about 70% on FIG. 3 for prior art systems.

It is clear that even for moderate recirculation flows a cell DC efficiency increase of about an additional 30 percentage points can be realized. Part of the efficiency gain is directly due to the ability to increase overall system fuel utilization to about 100%, and the rest is due to the boost in average Nernst provided by the recirculated H₂, CO flow. Although the proposed system introduces additional parasitic losses such as recirculation pumping loss, the overall system efficiency will be considerably higher than the conventional systems of FIGS. 2A-2B. Further, as mentioned earlier, the reliability of the system to fuel-flow mal-distribution effects will be greatly enhanced with the system of this invention. Secondary advantages include a potential reduction in airflow required to cool the cells, as recirculation tends to make the cell temperature distribution along the cell more uniform.

A variety of metals and metal oxide combination may be used for the beds 44 and 46 depending on the requirements to optimize the overall system. The beds contain a metal material selected from the group consisting of:
Fe, Mn, Co, Cr, Al, Zr, Sc, Y, La, Ti, Hf, Ce, Ni, Cu, Nb, Ta, V, Mo, Pd, W, as well as their alloys and oxides, halides, sulfates, sulfites, and carbonates of these elements. Preferred materials are: Fe, Mn, Co, Cr, Al, Zr and their alloys and oxides. Fe and Fe oxides are most preferred.

Since each bed 44 and 46 gets depleted, switching/reversing of gas flows via line 43 between the beds is necessary once the beds have reached their capacity, to ensure a continuous process. The frequency of switching will depend on the size of the bed. Reduction of the metal on bed 44 generally needs heat input while its oxidation in bed 46 generates heat Q. The beds are intended to be situated so that they can share the heat Q between themselves eliminating the needs for separate thermal management of the beds using heat exchangers. Optionally, the recirculation flow rate can be adapted to thermally manage the beds via sensible heat exchange.

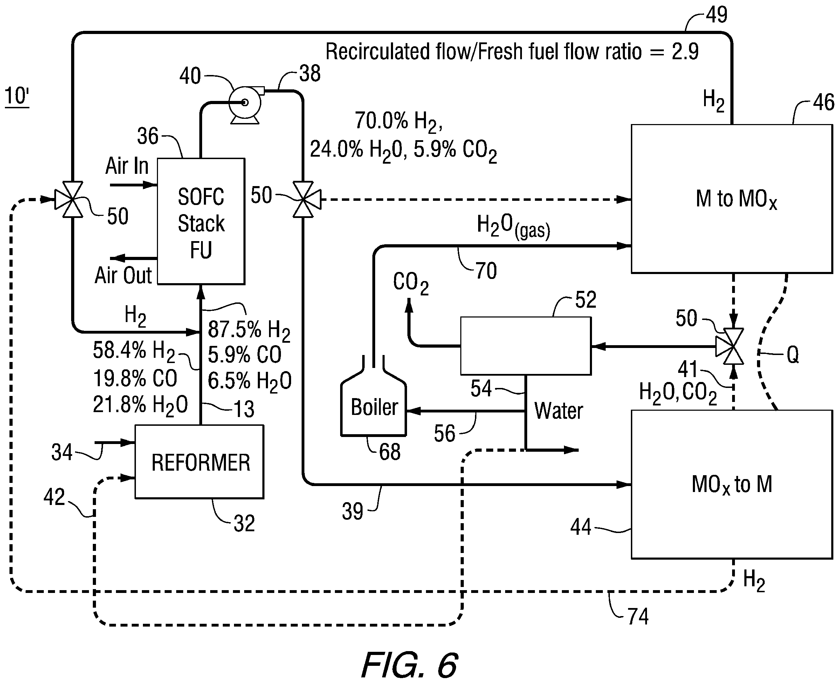

FIG. 6 shows yet another embodiment of the proposed system where an additional boiler 68 is used to generate steam 70 to oxidize the second bed 46 and essentially only H₂ gas 49 is recirculated back to the reformed fuel and then to the stack 36. In FIG. 6, a stream of essentially all H₂ 74 can optionally be fed from first bed 44 to valve 50 prior to entry into stack 36.

This invention is neither limited to solid oxide fuel cells (SOFCs) nor their operation on natural gas. Any fuel cells that either use H₂ or CO as their fuel can be adapted to use this system. Additionally, recirculation rates may be adjusted to ensure proper oxygen to carbon ratio to avoid carbon deposition.

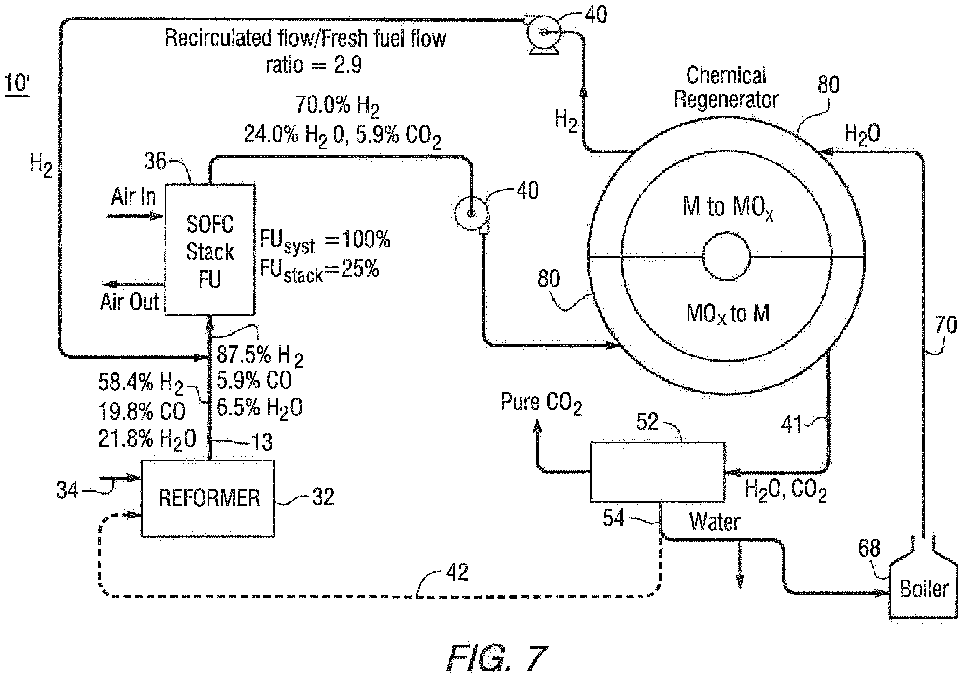

In an alternate embodiment shown in FIG. 7, the two beds of FIGS. 4 and 6 are combined into a single chemical regenerator 80 where identifying numbers from FIGS. 4 and 6 are repeated. This eliminates some streams of FIGS. 4 and 6 but somewhat complicates heat transfer between previous beds 44 and 46. In FIG. 7, reference can be made to previous text for system components and flow streams.

The system of this invention utilizes a high efficiency fuel cell system, which can run reliably at high fuel utilizations with natural gas or any carbonaceous fuel, is presented. The system utilizes metal redox reactions to extract fuel from a fuel cell anode gas stream, which would otherwise be utilized inefficiently by direct combustion. The extracted fuel can be recirculated back to the fuel cell inlet at high rates not only to ensure a high inlet mole-fraction of fuel but also to increase the average Nernst potential across the cell. In theory, a 100% electrochemical utilization of the incoming fuel overall is possible whilst reducing in-stack fuel utilization values resulting in high system electrical efficiencies and enhanced reliability to fuel flow mal-distributions. Further, it also enables complete capture of CO₂ by condensing out the steam from the final anode side exhaust. The system can be easily adapted to existing fuel cell systems with minor modifications.

While specific embodiments of the invention have been described in detail, it will be appreciated by those skilled in the art that various modifications and alternatives to those details could be developed in light of the overall teachings of the disclosure. Accordingly, the particular embodiments disclosed are meant to be illustrative only and not limiting as to the scope of the invention which is to be given the full breadth of the appended claims and any and all equivalents thereof.

## Claims

1. A method of providing anode gas exhaust chemical recuperation from a fuel cell stack as well as carbon dioxide capture, comprising the steps:
(a) feeding a fuel and optional water to a reformer to provide a reformed fuel stream consisting essentially of H₂, CO and H₂O;
(b) feeding the reformed fuel as well as feeding air to a fuel cell stack containing a fuel electrode anode, and an air electrode and solid electrolyte between the electrodes, operating at a temperature over 600°C, to provide energy and anode gas exhaust containing at least H₂, H₂O and CO₂;
(c) feeding the anode gas exhaust to a first oxidation/reduction bed, containing a metal material, thus providing a redox exit stream consisting essentially of H₂O and CO₂ which is split into a first redox exit stream and a second redox exit stream;
(d) feeding the first redox exit stream to a condenser to provide separate CO₂ and H₂O streams; and
(e) feeding the second redox exit stream to a second oxidation/reduction bed, containing a metal material, to form a final redox exit stream comprising at least 65 vol.% H₂, which final redox exit stream is recirculated back into the reformed fuel in step (a).

2. The method of Claim 1, wherein both first and second oxidation/reduction beds contain a metal material selected from the group consisting of Fe, Mn, Co, Cr, Al, Zr, Sc, Y, La, Ti, Hf, Ce, Ni, Cu, Nb, Ta, V, Mo, Pd, W and their alloys and oxides.

3. The method of Claim 1, wherein both first and second oxidation/reduction beds contain a metal material selected from the group consisting of Fe, Mn, Co, Cr, Al, Zr, and their alloys and oxides.

4. The method of Claim 1, wherein both, first and second oxidation/reduction beds is a metal material selected from Fe or Fe oxide.

5. The method of Claim 1, wherein heat input is provided to the first oxidation/reduction bed and heat is generated in the second oxidation/reduction bed.

6. The method of Claim 5, wherein first and second oxidation/reduction beds are situated so that they can share heat, eliminating the need for separate thermal management.

7. The method of Claim 1, wherein a stream of H₂O and CO is recirculated from the first oxidation/reduction bed to the reformed fuel stream of step (a).

8. The method of Claim 1, wherein a boiler takes a feed of water from the condenser in step (d) which is then fed as steam to the second oxidation reduction bed.

9. The method of Claim 8, wherein the steam from the boiler oxidizes the second bed metal material.

10. The method of Claim 8, wherein only H₂ is recirculated back to the reformed fuel in step (a).

11. The method of Claim 8, wherein a stream of H₂ is recirculated from the first oxidation/reduction bed to the reformed fuel stream of step (a).

12. The method of Claim 1, wherein the first and second oxidation/reduction beds are combined into a single chemical regenerator.

13. The method of Claim 8, wherein the first and second oxidation/reduction beds are combined into a single chemical regenerator.

14. The method of Claim 13, wherein the chemical regenerator is fed steam from the boiler and anode exhaust gas from the fuel cell stack and exhausts H₂O and CO₂ into the condenser, and H₂ back into the reformed fuel.

## Patentansprüche

1. Verfahren zum Bereitstellen von chemischer Anodenabgasrückgewinnung aus einem Brennstoffzellenstapel sowie Kohlendioxidabscheidung, umfassend die Schritte:
(a) Zuführen eines Brennstoffs und gegebenenfalls von Wasser zu einem Reformer, um einen reformierten Brennstoffstrom zu erhalten, der im Wesentlichen aus H₂, CO und H₂O besteht;
(b) Zuführen des reformierten Brennstoffs und Zuführen von Luft zu einem Brennstoffzellenstapel, der eine Brennstoffelektrodenanode, eine Luftelektrode und einen festen Elektrolyten zwischen den Elektroden umfasst und bei einer Temperatur über 600 °C arbeitet, um Energie und Anodenabgas zu erzeugen, das wenigstens H₂, H₂O und CO₂ enthält;
(c) Zuführen des Anodenabgases zu einem ersten Oxidations/Reduktionsbett, das ein Metallmaterial enthält, um einen Redox-Abstrom zu erhalten, der im Wesentlichen aus H₂O und CO₂ besteht, der in einen ersten Redox-Abstrom und einen zweiten Redox-Abstrom aufgetrennt wird;
(d) Zuführen des ersten Redox-Abstroms zu einem Kondensator, um getrennte CO₂- und H₂O-Ströme zu erhalten; und
(e) Zuführen des zweiten Redox-Abstroms zu einem zweiten Oxidations/Reduktionsbett, das ein Metallmaterial enthält, um einen Redox-Endabstrom zu erhalten, der wenigstens 65 Vol.-% H₂ umfasst, welcher Redox-Endabstrom in den reformierten Brennstoff von Schritt (a) rückgeführt wird.

2. Verfahren gemäß Anspruch 1, wobei sowohl das erste als auch das zweite Oxidations/Reduktionsbett ein Metallmaterial ausgewählt aus der Gruppe bestehend aus Fe, Mn, Co, Cr, Al, Zr, Sc, Y, La, Ti, Hf, Ce, Ni, Cu, Nb, Ta, V, Mo, Pd, W und deren Legierungen und Oxiden enthalten.

3. Verfahren gemäß Anspruch 1, wobei sowohl das erste als auch das zweite Oxidations/Reduktionsbett ein Metallmaterial ausgewählt aus der Gruppe bestehend aus Fe, Mn, Co, Cr, Al, Zr und deren Legierungen und Oxiden enthalten.

4. Verfahren gemäß Anspruch 1, wobei sowohl das erste als auch das zweite Oxidations/Reduktionsbett ein Metallmaterial ausgewählt aus Fe und Fe-Oxid sind.

5. Verfahren gemäß Anspruch 1, wobei dem ersten Oxidations/Reduktionsbett Wärme zugeführt wird und in dem zweiten Oxidations/Reduktionsbett Wärme erzeugt wird.

6. Verfahren gemäß Anspruch 5, wobei das erste und das zweite Oxidations/Reduktionsbett so angeordnet sind, dass sie Wärme teilen können, um den Bedarf an getrenntem Wärmemanagement zu beseitigen.

7. Verfahren gemäß Anspruch 1, wobei ein Strom von H₂O und CO aus dem ersten Oxidations/Reduktionsbett zu dem reformierten Brennstoffstrom von Schritt (a) rückgeführt wird.

8. Verfahren gemäß Anspruch 1, wobei ein Heizkessel eine Zufuhr von Wasser aus dem Kondensator von Schritt (d) aufnimmt, das dann als Dampf dem zweiten Oxidations/Reduktionsbett zugeführt wird.

9. Verfahren gemäß Anspruch 8, wobei der Dampf aus dem Heizkessel das zweite Bettmetallmaterial oxidiert.

10. Verfahren gemäß Anspruch 8, wobei nur H₂ zu dem reformierten Brennstoff von Schritt (a) rückgeführt wird.

11. Verfahren gemäß Anspruch 8, wobei ein Strom von H₂ aus dem ersten Oxidations/Reduktionsbett zu dem reformierten Brennstoffstrom von Schritt (a) rückgeführt wird.

12. Verfahren gemäß Anspruch 1, wobei das erste und das zweite Oxidations/Reduktionsbett in einen einzigen chemischen Regenerator kombiniert sind.

13. Verfahren gemäß Anspruch 8, wobei das erste und das zweite Oxidations/Reduktionsbett in einen einzigen chemischen Regenerator kombiniert sind.

14. Verfahren gemäß Anspruch 13, wobei der chemische Regenerator Dampf aus dem Heizkessel und Anodenabgas aus dem Brennstoffzellenstapel erhält und H₂O und CO₂ in den Kondensator und H₂ zurück in den reformierten Brennstoff ausstößt.

## Revendications

1. Procédé pour donner une récupération chimique de l'échappement du gaz d'anode d'un empilement de piles à combustible ainsi qu'une capture du dioxyde de carbone, comprenant les stades :
(a) on charge un combustible et éventuellement de l'eau dans un reformeur pour obtenir un courant de combustible reformé consistant essentiellement en H₂, CO et H₂O;
(b) on charge le combustible reformé ainsi que de l'air de chargement dans un empilement de piles à combustible contenant une anode d'électrode à combustible et une électrode à air et de l'électrolyte solide entre les électrodes, on fait fonctionner à une température supérieure à 600°C pour obtenir de l'énergie et un échappement de gaz d'anode contenant au moins H₂, H₂O et CO₂;
(c) on charge l'échappement de gaz d'anode dans un premier lit d'oxydation/réduction contenant une matière métallique, en obtenant ainsi un courant de sortie redox consistant essentiellement en H₂O et en CO₂, qui est séparé en un premier courant de sortie redox et en un deuxième courant de sortie redox;
(d) on charge le premier courant de sortie redox dans un condenseur pour obtenir des courants distincts de CO₂ et d'H₂O et
(e) on charge le deuxième courant de sortie redox dans un deuxième lit d'oxydation/réduction contenant une matière métallique, pour former un courant de sortie final redox, comprenant au moins 65% en volume d'H₂, lequel courant de sortie final redox est retourné dans le combustible reformé au stade (a).

2. Procédé suivant la revendication 1, dans lequel à la fois le premier et le deuxième lits d'oxydation/réduction contiennent une matière métallique choisie dans le groupe consistant en Fe, Mn, Co, Cr, Al, Zr, Sc, Y, La, Ti, Hf, Ce, Ni, Cu, Nb, Ta, V, Mo, Pd, W et leurs alliages et leurs oxydes.

3. Procédé suivant la revendication 1, dans lequel à la fois le premier et le deuxième lits d'oxydation/réduction contiennent une matière métallique choisie dans le groupe consistant en Fe, Mn, Co, Cr, Al, Zr et leurs alliages et leurs oxydes.

4. Procédé suivant la revendication 1, dans lequel à la fois le premier et le deuxième lits d'oxydation/réduction est une matière métallique choisie parmi Fe ou un oxyde de Fe.

5. Procédé suivant la revendication 1, dans lequel de la chaleur est apportée au premier lit d'oxydation/réduction et de la chaleur est produite dans le deuxième lit d'oxydation/réduction.

6. Procédé suivant la revendication 5, dans lequel le premier et le deuxième lits d'oxydation/réduction sont situés de manière à pouvoir partager de la chaleur, ce qui élimine le besoin d'une gestion thermique distincte.

7. Procédé suivant la revendication 1, dans lequel un courant d'H₂O et de CO est recirculé du premier lit d'oxydation/réduction au courant de combustible reformé du stade (a).

8. Procédé suivant la revendication 1, dans lequel une chaudière prend une charge d'eau du condenseur au stade (d), laquelle est envoyée ensuite comme vapeur au deuxième lit d'oxydation/réduction.

9. Procédé suivant la revendication 8, dans lequel la vapeur de la chaudière oxyde la matière métallique du deuxième lit.

10. Procédé suivant la revendication 8, dans lequel on recircule seulement du H₂ au combustible reformé du stade (a).

11. Procédé suivant la revendication 8, dans lequel on retourne un courant d'H₂ du premier lit d'oxydation/réduction au courant de combustible reformé du stade (a).

12. Procédé suivant la revendication 1, dans lequel on combine les premier et deuxième lits d'oxydation/réduction en un régénérateur chimique unique.

13. Procédé suivant la revendication 8, dans lequel on combine le premier et le deuxième lits d'oxydation/réduction en un régénérateur chimique unique.

14. Procédé suivant la revendication 13, dans lequel on charge de la vapeur dans le régénérateur chimique à partir de la chaudière et on charge du gaz d'échappement d'anode de l'empile de piles à combustible et du H₂O et CO₂ d'échappement dans le condenseur et on retourne de l'H₂ au combustible reformé.
